(19) Europäisches Patentamt / European Patent Office / Office européen des brevets

(11) **EP 3 652 505 B1**

(12) **EUROPÄISCHE PATENTSCHRIFT**

(45) Veröffentlichungstag und Bekanntmachung des Hinweises auf die Patenterteilung:
**27.04.2022  Patentblatt 2022/17**

(21) Anmeldenummer: **18732757.2**

(22) Anmeldetag: **19.06.2018**

(51) Internationale Patentklassifikation (IPC):
**G01F 1/84** *(2006.01)*    **G01F 15/02** *(2006.01)*
**F01M 5/00** *(2006.01)*    **F16N 7/00** *(2006.01)*
**F16N 39/04** *(2006.01)*    G01N 11/16 *(2006.01)*

(52) Gemeinsame Patentklassifikation (CPC):
**G01F 1/84; F01M 5/00; F16N 7/00; F16N 39/04;**
**G01F 15/02;** F16N 2210/06; F16N 2250/08;
F16N 2260/05; G01N 11/16

(86) Internationale Anmeldenummer:
**PCT/EP2018/066288**

(87) Internationale Veröffentlichungsnummer:
**WO 2019/011594 (17.01.2019 Gazette 2019/03)**

(54) **MESSSYSTEM**

MEASURING SYSTEM

SYSTÈME DE MESURE

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **10.07.2017   DE 102017115400**

(43) Veröffentlichungstag der Anmeldung:
**20.05.2020   Patentblatt 2020/21**

(73) Patentinhaber: **Endress+Hauser (Deutschland)
GmbH+Co. KG
79576 Weil am Rhein (DE)**

(72) Erfinder:
• **TRAULSEN, Merten
22927 Großhansdorf (DE)**
• **MAHRT, Jan-Dirk
21227 Bendesdorf (DE)**

(74) Vertreter: **Andres, Angelika Maria
Endress+Hauser Group Services
(Deutschland) AG+Co. KG
Colmarer Straße 6
79576 Weil am Rhein (DE)**

(56) Entgegenhaltungen:
**US-A1- 2006 277 982     US-A1- 2014 123 742**

• **Caterpillar: "MAK - M 32 C - Project guide", , 1.
September 2006 (2006-09-01), XP055507829,
Gefunden im Internet:
URL:https://www.stet.pt/dl/m32c_aux.pdf
[gefunden am 2018-09-18]**
• **Dnv: "Part 4 - Chapter 6 - Piping Systems" In:
"Rules for classification of Ships", 1. Juli 2008
(2008-07-01), DNV, XP055507835, Seite 22, Absatz
C400**

**Beschreibung**

Die Erfindung betrifft ein Messsystem, aufweisend: einen ersten Leitungszweig, durch den ein Medium in einer vorgegebenen Durchflussrichtung fließt und ein in dem ersten Leitungszweig angeordnetes und von dem Medium durchflossenes Messgerät zur Bestimmung und/oder Überwachung des Durchflusses und/oder der Viskosität des Mediums, das eine vorgegebene Nennweite aufweist.

Derartige Messsysteme kommen beispielsweise bei Bunkermesssystemen auf Seefahrzeugen zum Einsatz, bei denen das Medium zum Beispiel ein zur Schmierung eines Seefahrzeugmotors vorgesehenes Schmieröl ist, welches von einem auf dem Seefahrzeug angeordneten Bunkertank über das Messsystem dem Seefahrzeugmotor zugeführt wird. Ein solches Bunkersystem ist beispielsweise in der WO2016/059132 beschrieben. Um eine ausreichende Schmierung des Motors zu gewährleisten, muss sichergestellt sein, dass dem Seefahrzeugmotor eine vorgegebene Menge an Schmieröl zugeführt wird. Dies wird anhand der Messwerte des Durchfluss-Messgeräts des Messsystems dokumentiert, welches hierfür eine vorgegebene Genauigkeit aufweisen muss.

Bei Durchfluss-Messgeräten, insbesondere Coriolis-Durchfluss-Messgeräten, wird diese Genauigkeit im Wesentlichen durch die Nennweite des Messgeräts mitbestimmt: je kleiner die Nennweite, desto größer die Genauigkeit. Aufgrund einer erforderlichen Genauigkeit für den Messwert des Durchfluss-Messgeräts ergibt sich daher z.B. eine vorgegebene, maximal zulässige Nennweite. Bei großen Durchflüssen führen kleine Nennweiten jedoch zu einem hohen Druckverlust. Hierdurch muss ein Kompromiss zwischen einer erwünschten Genauigkeit und einem zumutbaren Druckverlust gefunden werden. Ein hoher Druckverlust ist zudem insbesondere in Kombination mit einer hohen Viskosität des Mediums problematisch, da hier z.B. nicht mehr eine ausreichende Schmierung des Motors gewährleistet ist.

In der US 2014/0123742 A1 ist ein Messsystem zur Messung von Kraftstoffverbrauch offenbart, mittels dem ein Messfehler eines Coriolis-Durchfluss-Messgeräts reduziert wird. Hierzu weist das Messsystem eine Temperaturregeleinheit und eine Druckerhöhungseinheit auf.

In der US 2006/0277982 A1 ist ein Messsystem zur kontinuierlichen Messung eines dynamischen Fluidverbrauchs eines Verbrauchers, mittels eines kontinuierlich arbeitenden, in beide Richtungen durchströmbaren Durchfluss-Messgeräts, offenbart. Auch dieses Messsystem weist eine Temperaturregeleinheit und eine Druckerhöhungseinheit auf.

Der Erfindung liegt die Aufgabe zugrunde, den Durchfluss und/oder die Viskosität in dem Messsystem für beliebige Nennweiten (d.h. mit beliebig hoher Genauigkeit) ohne einen hohen Druckverlust und mit geringer Ausfallsicherheit an dem Messgerät zuverlässig zu bestimmen.

Die Aufgabe wird gelöst durch ein Messsystem, aufweisend: einen ersten Leitungszweig, durch den ein Medium in einer vorgegebenen Durchflussrichtung fließt, ein in dem ersten Leitungszweig angeordnetes und von dem Medium durchflossenes Messgerät zur Bestimmung und/oder Überwachung des Durchflusses und/oder der Viskosität des Mediums, wobei das Messgerät eine vorgegebene Nennweite aufweist, und ein in der vorgegebenen Durchflussrichtung in dem ersten Leitungszweig vor dem Messgerät angeordnetes Vorbereitungssystem. Das Vorbereitungssystem weist eine zur Erhöhung des Drucks des Mediums in dem ersten Leitungszweig ausgestaltete Druckerhöhungseinheit auf, umfassend: eine in einem Pumpenabschnitt des ersten Leitungszweigs angeordnete Pumpe; und eine erste Rückschlagarmatur, die in einem zu dem Pumpenabschnitt parallelen ersten Abschnitt des ersten Leitungszweigs angeordnet ist, wobei die erste Rückschlagarmatur im Falle des Erreichens eines ersten vorgegebenen Solldrucks und nur in einer zur vorgegebenen Durchflussrichtung entgegengesetzten Richtung durchströmbar ist. Das Vorbereitungssystem weist ferner eine zur Regelung der Temperatur des Mediums in dem ersten Leitungszweig ausgestaltete Temperaturregeleinheit auf, umfassend: zumindest ein Heizelement, zumindest ein erstes Temperaturmessgerät und eine mit dem Heizelement und dem ersten Temperaturmessgerät verbundene Regel/Auswerteeinheit.

Die Pumpe in dem Pumpenabschnitt dient zum Einen als eine Druckerhöhungspumpe. Dadurch, dass die erste Rückschlagarmatur in einem zum Pumpenabschnitt parallelen ersten Abschnitt des ersten Leitungszweigs angeordnet ist, wird von der Pumpe auch ein Anteil des Mediums in diesen zum Pumpenabschnitt parallelen Abschnitt geleitet. Dieser parallele erste Abschnitt ist aufgrund der Rückschlagarmatur nur in einer Richtung entgegen der vorgegebenen Durchflussrichtung und nur für den Fall, dass der Druck des Mediums größer ist als der erste vorgegebene Solldruck passierbar. Daher durchströmt das Medium zunächst in der vorgegebenen Durchflussrichtung die Pumpe, um dann im Falle des Erreichens des vorgegebenen Solldrucks durch den zum Pumpenabschnitt parallelen ersten Abschnitt wieder entgegen der vorgegebenen Durchflussrichtung zurückzufließen. Der Pumpenabschnitt und der dazu parallele erste Abschnitt des Vorbereitungssystems sind miteinander verbunden. Das Medium wird bei Erreichen des vorgegebenen Solldrucks daher durch diese miteinander verbundenen Abschnitte (Pumpenabschnitt und den dazu parallelen ersten Abschnitt) in einem Kreislauf gefördert.

Mittels der Rückschlagarmatur ist sichergestellt, dass sich die Druckerhöhung in dem Pumpenabschnitt in einem durch den ersten Solldruck bestimmten Rahmen bewegt.

Die Erfindung betrifft vorzugsweise Medien, deren dynamische Viskosität mit steigender Temperatur abnimmt. Dieser Zusammenhang zwischen dynami-

scher Viskosität $\eta$ und Temperatur T wird oftmals mittels der Arrhenius-Andrade-Beziehung beschrieben, wobei $\eta_0$ eine Materialkonstante, R die Gaskonstante, und $E_A$ eine Aktivierungsenergie ist:

$$\eta = \eta_0 \cdot \exp\left(\frac{E_A}{R \cdot T}\right)$$

Wird ein solches Medium mittels des Heizelements erwärmt, führt dies zur einer Erniedrigung der Viskosität.

In einer bevorzugten Ausgestaltung ist dabei das Heizelement der Temperaturregeleinheit in dem Pumpenabschnitt angeordnet. Hierdurch wird aufgrund der Erwärmung des Mediums in dem Pumpenabschnitt der Druck des Mediums zusätzlich erhöht.

Insbesondere ist das Heizelement in der vorgegebenen Durchflussrichtung hinter der Pumpe angeordnet.

In der Temperaturregeleinheit wird das Heizelement bzw. dessen Heizleistung mittels des Messwerts des ersten Temperaturmessgeräts geregelt. Das erste Temperaturmessgerät kann zum Beispiel als ein widerstandsbasiertes Thermometer, wie beispielsweise ein Pt100 oder Pt1000, oder als ein thermospannungsbasiertes Thermometer bzw. Thermoelement, oder ein anderes aus dem Stand der Technik bekanntes Temperaturmessgerät ausgestaltet sein.

Das erfindungsgemäße Messsystem ermöglicht damit die Verwendung von Durchfluss-Messgeräten mit kleinen Nennweiten im Verhältnis zu dem damit gemessenen Durchfluss, ohne dass der eingangs erwähnte problematische Druckabfall über dem Messgerät auftritt. Ein weiterer Vorteil ist, dass ein Medium, welches das erfindungsgemäßes Vorbereitungssystem durchströmt hat, eine erniedrigte Viskosität und damit verbesserte Fließeigenschaften aufweist. Da das erfindungsgemäße Vorbereitungssystem über die Erwärmung des Mediums und die Erhöhung des Drucks die Viskosität und/oder den Durchfluss beeinflusst, eignet sich das erfindungsgemäße Messsystem also für Anwendungen in denen sichergestellt sein muss, dass in dem Leitungszweig ein Medium mit einer bekannten Viskosität und/oder ein bekannter Durchfluss vorliegt, und dass der ermittelte Messwert für die bekannte Viskosität und/oder den bekannten Durchfluss eine vorgegebene Genauigkeit aufweist. Eine typische Anwendung ist das eingangs genannte Beispiel, in dem das Messgerät zur Überwachung der Schmierung eines Motors eingesetzt wird.

Eine Bestimmung und/oder Überwachung mittels des Messgeräts einer z.B. ursprünglich vorliegenden Viskosität, d.h. der Viskosität des Mediums, bevor es das Vorbereitungssystem durchflossen hat, ist hingegen aufgrund der gezielten Beeinflussung des Mediums durch das Vorbereitungssystems im Rahmen der Erfindung nicht vorgesehen. Gleiches gilt auch für den Durchfluss.

Bevorzugt ist das erste Temperaturmessgerät in dem zum Pumpenabschnitt parallelen ersten Abschnitt angeordnet.

Erfindungsgemäß weist das Vorbereitungssystem ferner eine zweite Rückschlagarmatur auf, die in einem zu dem Pumpenabschnitt parallelen zweiten Abschnitt des ersten Leitungszweigs angeordnet ist und die im Falle des Erreichens eines zweiten vorgegebenen Solldrucks und nur in Durchflussrichtung durchströmbar ist, wobei der zweite vorgegebene Solldruck kleiner als der erste vorgegebene Solldruck ist.

Auch der parallele zweite Abschnitt des Vorbereitungssystems ist mit dem Pumpenabschnitt verbunden. Findet in einem Normalbetrieb wie vorgesehen mittels der arbeitenden Pumpe eine Druckerhöhung des Mediums in dem Pumpenabschnitt statt, so ist in diesem Normalbetrieb die zweite Rückschlagarmatur nicht geöffnet, da in dem parallelen zweiten Abschnitt in der vorgesehenen Durchflussrichtung immer ein kleinerer Druck vor der zweiten Rückschlagarmatur herrscht als hinter der zweiten Rückschlagarmatur. Nur im Falle eines Ausfalls, in dem z.B. die Pumpe blockiert ist und dass Medium nicht mehr den Pumpenabschnitt durchfließen kann, kehrt sich dieses Verhältnis um. In diesem Fall herrscht in Durchflussrichtung vor der zweiten Durchflussarmatur ein größerer Druck als dahinter. Für den Fall, dass sich durch eine derartige Blockierung der Pumpe eine hohe Druckdifferenz aufbaut, die größer als der zweite vorgegebene Solldruck ist, öffnet sich die zweite Rückschlagarmatur und ist dann von dem Medium passierbar. Mittels der zweiten Rückschlagarmatur wird damit ein Bypass für die Pumpe geschaffen, mit dem gewährleistet ist, dass immer ausreichend Medium den ersten Leitungszweig durchströmt. Dies ist z. B. wichtig für die Ausfallsicherheit im Falle des eingangs genannten Beispiels der Schmierung eines Motors. Daher sollte der zweite vorgegebene Solldruck für die zweite Rückschlagarmatur möglichst klein gewählt sein. Insbesondere ist der vorgegebene zweite Solldruck um zumindest einen Faktor 5 kleiner als der erste vorgegebene Solldruck der ersten Rückschlagarmatur.

In einer weiteren Ausgestaltung der Erfindung handelt es sich bei der Pumpe um eine Zahnradpumpe.

In einer vorteilhaften Weiterbildung der Erfindung weisen das Vorbereitungssystem und das Messgerät einen zum ersten Leitungszweig parallelen zweiten Leitungszweig und im ersten Leitungszweig und/oder zweiten Leitungszweig angeordnete Ventile auf. Der erste und der zweite Leitungszweig sind miteinander verbunden. In Abhängigkeit von der Einstellung der Ventile fließt das Medium entweder über den ersten Leitungszweig oder über den zweiten Leitungszweig in der vorhergesehenen Durchflussrichtung.

Dabei fließt insbesondere im Normalbetrieb das Medium über den ersten Leitungszweig, wohingegen in einem Wartungs- oder Notbetrieb das Medium über den zweiten Leitungszweig fließt. Im Normalbetrieb durchströmt das Medium daher zunächst das Vorbereitungssystem und anschließend das Messgerät. Der zweite Leitungszweig dient daher insbesondere als Bypass für das Vorbereitungssystem und das Messgerät, welche mittels einer entsprechenden Einstellung der Ventile überbrückbar sind, beispielsweise für den Fall einer Wartung und/oder eines Austauschs von im ersten Leitungszweig angeordneter Komponenten. Die Ventile sind dabei beispielsweise als manuell bedienbare Kugelhahnventile ausgestaltet.

In einer vorteilhaften Weiterbildung der Erfindung weist die Temperaturregeleinheit ein mit dem Heizelement und der Regel-/Auswerteeinheit verbundenes zweites Temperaturmessgerät auf. Das zweite Temperaturmessgerät und die Regel-/Auswerteeinheit sind dazu ausgestaltet, beim Überschreiten einer vorgebbaren Grenztemperatur einen Alarm in einer Kontrolleinheit auszulösen und/oder das Heizelement abzuschalten.

Dadurch ist z.B. im Falle eines Versagens des zur Regelung der Temperatur eingesetzten ersten Temperaturmessgeräts weiterhin eine Überwachung der Temperatur des Mediums mit der Temperaturregeleinheit gewährleistet. Insbesondere dient das zweite Temperaturmessgerät der Erzeugung von Alarmen und gegebenenfalls einem Abschalten des Heizelements. Auch das zweite Temperaturmessgerät kann zum Beispiel als ein widerstandsbasiertes Thermometer, wie beispielsweise ein Pt100 oder Pt1000, oder als ein thermospannungsbasiertes Thermometer bzw. Thermoelement, oder ein anderes aus dem Stand der Technik bekanntes Temperaturmessgerät ausgestaltet sein.

Bei der Kontrolleinheit handelt es sich zum Beispiel um eine speicherprogrammierte Steuerungseinheit (kurz, SPS). Die Kontrolleinheit kann auch eine zur Anzeige des Alarms ausgestaltete Anzeigeeinheit wie etwa ein Display oder blinkende LEDs umfassen.

In einer besonders vorteilhaften Ausgestaltung handelt es sich bei dem Messgerät um ein Coriolis-Messgerät zur Bestimmung des Durchflusses und/oder der Viskosität, das als vorgegebene Nennweite eine Nennweite kleiner als DN 15, vorzugsweise kleiner als DN 10, aufweist.

Derartige Messgeräte werden von der Anmelderin in unterschiedlichen Ausgestaltungen hergestellt und vertrieben. Ein Coriolis-Messgerät ermöglicht eine sehr genaue Bestimmung des Durchflusses bzw. der Viskosität. Zur näheren Erläuterung des zugrunde liegenden Messprinzips eines gattungsgemäßen Coriolis-Messgeräts sei beispielsweise auf die DE 10 201 4119427 DE, die 10 2011 006 971 A1, die DE 10 2011 006 919A1, die US 2013/0319134 A1, die US 8,281,668 B2 und die US 6,415,668 B1 verwiesen.

Insbesondere mit kleinen Nennweiten lassen sich sehr hohe Genauigkeiten bei der Messung erreichen. Beispielsweise liegt bei einer Nennweite von DN 8 eine Genauigkeit von 0,5% vor. Bei einer Nennweite von DN 15 liegt dagegen eine Genauigkeit von 5% vor.

In einer Ausgestaltung der Erfindung ist die Temperaturregeleinheit dazu ausgestaltet, die Temperatur in dem ersten Leitungszweig auf eine vorgegebene Temperatur mit einer Genauigkeit von zumindest +/- 9° C, insbesondere +/- 5°C zu regeln, wobei die vorgegebene Temperatur insbesondere zwischen 30 und 70°C liegt. Dies bedeutet, dass mittels der Temperaturregeleinheit eine Abweichung von maximal 9°C von der vorgegebenen Temperatur (d.h. einer Solltemperatur) vorliegt.

In einer weiteren Ausgestaltung der Erfindung ist die Temperaturregeleinheit dazu ausgestaltet, die Temperatur in dem ersten Leitungszweig auf eine vorgegebene Temperatur mit einer Genauigkeit von zumindest 30% zu regeln. Im Rahmen dieser Anmeldung wird, wenn nicht explizit anders angegeben, eine derartige relative Abweichung der Temperatur in Grad Celsius bestimmt. Im Falle einer vorgegebenen Temperatur von 30° C beträgt die maximale Abweichung also gerade +/- 9° C.

In einer vorteilhaften Weiterbildung der Erfindung weist das Messsystem ein in dem ersten Leitungszweig angeordnetes drittes Temperaturmessgerät auf, das dazu ausgestaltet ist, einen Alarm in der Kontrolleinheit auszulösen, falls die von dem dritten Temperaturmessgerät gemessene Temperatur zumindest eine weitere vorgebbare Grenztemperatur über- oder unterschreitet.

Bei einer ersten weiteren vorgebbaren Grenztemperatur handelt es sich beispielsweise um einen obere Grenztemperatur, so dass ein "High Alarm" in der Kontrolleinheit ausgelöst wird, wenn diese überschritten wird. Bei einer zweiten weiteren vorgebbaren Grenztemperatur handelt es sich beispielsweise um eine untere Grenztemperatur, so dass ein "Low Alarm" in der Kontrolleinheit ausgelöst wird, wenn diese unterschritten wird. Liegen sowohl diese untere als auch obere Grenztemperatur vor, überwacht das dritte Temperaturmessgerät, dass die Temperatur des Mediums in einem durch die beiden vorgebbaren weiteren Grenztemperaturen definiertem Temperaturintervall liegt. Auch das dritte Temperaturmessgerät kann zum Beispiel als ein widerstandsbasiertes Thermometer, wie beispielsweise ein Pt100 oder Pt1000, oder als ein thermospannungsbasiertes Thermometer bzw. Thermoelement, oder ein anderes aus dem Stand der Technik bekanntes Temperaturmessgerät ausgestaltet sein.

In einer Ausgestaltung dieser vorteilhaften Weiterbildung ist das dritte Temperaturmessgerät in der vorgegebenen Durchflussrichtung hinter dem Messgerät angeordnet. Selbstverständlich kann es auch in Durchflussrichtung vor dem Messgerät angeordnet sein.

In einer besonders vorteilhaften Weiterbildung ist das Messsystem auf einem Seefahrzeug vorgesehen. Das Messsystem ist dazu ausgestaltet, das Medium über den ersten oder den zweiten Leitungszweig von einem auf dem Seefahrzeug angeordneten Bunkertank zu einem auf dem Seefahrzeug angeordneten Motor zu führen. Wie vorstehend erwähnt ist das Messsystem insbesondere dazu ausgestaltet, das Medium in dem Normalbetrieb über den ersten Leitungszweig dem Motor zuzuführen, wohingegen in dem Wartungs- oder Notbetrieb das Medium über den zweiten Leitungszweig dem Motor zugeführt wird.

In einer Ausgestaltung dieser besonders vorteilhaften Weiterbildung ist der Bunkertank in der vertikalen Position in Bezug auf den Motor oberhalb des Motors angeordnet. Dadurch fließt das Medium im Wesentlichen durch die Schwerkraft bedingt von dem Bunkertank zu dem Motor.

Für derartige Bunkertanks herrschen, gegebenenfalls in entsprechenden sicherheitsrelevanten Normen definierte, Einschränkungen an einen vertikalen Mindestabstand zwischen dem Motor bzw. einer eingangs des Motors angeordneten Pumpe und dem Niveau des Mediums in dem Bunkertank. Nur mittels des erfindungsgemäßen Vorbereitungssystem können für die eingangs genannten Grenzfälle eines zunächst starkviskosen bzw. kalten Mediums und einer hohen Durchflussrate in diesem Fall die in den Normen definierten Anforderungen an den vertikalen Mindestabstand eingehalten werden, so dass gleichzeitig eine ausreichende Schmierung des Motors gewährleistet ist.

In einer weiteren Ausgestaltung des erfindungsgemäßen Messsystems handelt es sich bei dem Medium um ein Mineralöl. Insbesondere handelt es sich bei dem Medium um ein Kraftstofföl, um ein Motorschmieröl, oder um ein Heizöl.

In einer Ausgestaltung der Erfindung handelt es sich bei dem Medium um ein Motorschmieröl gemäß der Society of Automotive Engineers (SAE) Klassifikation SAE 15 bis SAE 60.

In einer Ausgestaltung der Erfindung weist das Medium vor dem Vorbereitungssystem eine kinematische Viskosität (v) von maximal 1880 mm$^2$/s auf.

In einer Ausgestaltung der Erfindung weist das Medium vor dem Vorbereitungssystem eine dynamische Viskosität ($\eta$) von maximal 1760·10$^{-3}$ Pa·s (Millipascalsekunden) auf.

Die kinematische Viskosität (v) hängt mit der dynamischen Viskosität ($\eta$) über die Dichte zusammen. Bei Motorschmierölen wird in der Regel die kinematische Viskosität verwendet.

In einer Ausgestaltung der Erfindung beträgt die kinematische Viskosität des Mediums bei einer Temperatur von 40° zwischen 30 und 400 mm$^2$/s.

In einer Ausgestaltung der Erfindung beträgt die kinematische Viskosität des Mediums bei einer Temperatur von 100° zwischen 5 und 30 mm$^2$/s.

Die Erfindung wird anhand der nachfolgenden, nicht maßstabsgetreuen Figuren näher erläutert, wobei gleiche Bezugszeichen gleiche Merkmale bezeichnen. Wenn es die Übersichtlichkeit erfordert oder es anderweitig sinnvoll erscheint, wird auf bereits erwähnte Bezugszeichen in nachfolgenden Figuren verzichtet. Es zeigt:

Fig. 1: Eine Ausgestaltung des erfindungsgemäßen Messsystems;

Fig. 2: Experimentelle Untersuchungen mit dem erfindungsgemäßen Messsystem;

Fig. 3: Ein Seefahrzeug mit einem erfindungsgemäßen Messsystem.

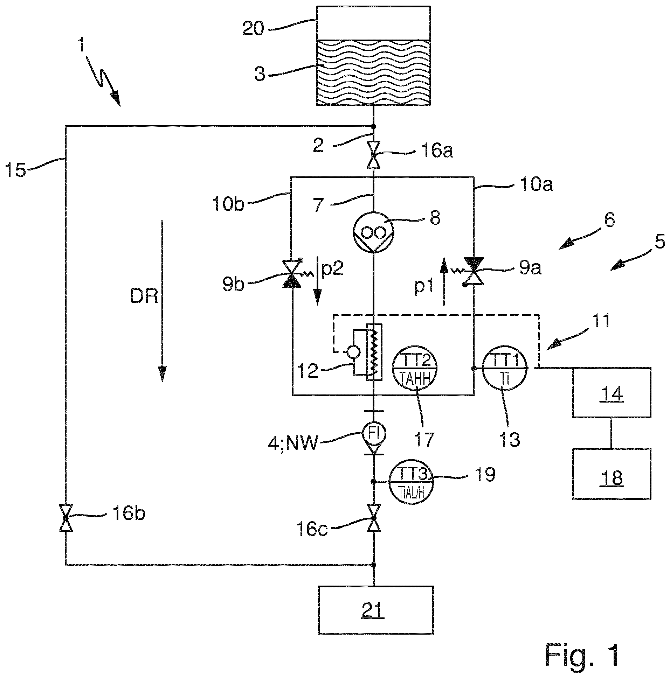

In Fig. 1 ist eine Ausgestaltung des erfindungsgemäßen Messsystems 1 dargestellt. Im oberen Abschnitt ist ein Bunkertank 20 mit einem darin enthaltenen fließfähigen Medium 3 dargestellt. Diese wird im Normalbetrieb in einer vorgesehenen Durchflussrichtung DR über den ersten Leitungszweig 2 einem Motor 21 zugeführt. Bei dem Medium 3 handelt es sich z.B. um ein SAE 50 Motorschmieröl. Um die Schmierung des Motors 21 zu überwachen, ist ein Coriolis-Durchfluss-Messgerät 4 mit einer Nennweite NW von DN 8 in dem ersten Leitungszweig 2 angeordnet. Da sich derartige vom Medium 3 durchflossene Messgeräte 4 auch zur Bestimmung und/oder Überwachung der Viskosität eignen, ist die Erfindung keinesfalls auf die hier und im folgenden beschriebene Verwendung als Durchfluss-Messgerät 4 beschränkt.

Vorteilhaft sind dabei über einen zweiten Leitungszweig 15 das Vorbereitungssystem und das Messgerät 4 überbrückbar. Der erste 2 und/oder der zweite Leitungszweig 15 sind beispielsweise als Rohrleitungen aus einem Stahl ausgebildet. Dadurch können im Wartungsbetrieb z.B. die im ersten Leitungszweig 2 angeordneten Komponenten ausgetauscht und/oder gewartet werden, oder das Messgerät 4 kann kalibriert werden.

Zur Überbrückung des ersten Leitungszweigs 2 sind hier die in dem ersten Leitungszweig 2 und in dem zweiten Leitungszweig 15 manuell bedienbaren Kugelhahnventile 16a,16b,16c angeordnet. Je nach deren Einstellung strömt das Medium 3 daher in der vorgesehen Durchflussrichtung DR entweder über den ersten Leitungszweig 2 (Normalbetrieb) oder über dem zweiten Leitungszweig 15 (Wartungs- bzw. Notbetrieb) von dem Bunkertank 20 zu dem Motor 21.

Das Medium 3 durchströmt in dem ersten Leitungszweig 2 das erfindungsgemäße Vorbereitungssystem 5, bevor es das Messgerät 4 durchfließt. In der hier gezeigten Ausgestaltung des erfindungsgemäßen Messsystems 1 sind in dem Vorbereitungssystem 5 drei zueinander parallele und miteinander verbundene Abschnitte des ersten Leitungszweigs 3 vorgesehen: nämlich ein in der vorgehen Durchflussrichtung DR durchflossener vom Medium 3 durchströmter Pumpenabschnitt 7, ein erster zum Pumpenabschnitt 7 paralleler Abschnitt 10a und ein zweiter zum Pumpenabschnitt 7 paralleler Abschnitt 10b. In dem Pumpenabschnitt 7 ist in der vorgegebenen Durchflussrichtung DR eine Zahnrad-Pumpe 8 und ein Heizelement 12 angeordnet. Bei dem Heizelement 12 handelt es sich zum Beispiel um einen Rohrheizkörper, wie er beispielsweise von der Firma Schniewindt hergestellt und vertrieben wird. Das Heizelement 12 ist in Kombination mit einem einer Regel-/Auswerteeinheit 14 zugeordnetem Regler wie etwa einer Thyristorsteuerung und einem ersten Temperaturmessgerät 13 einer Temperaturregeleinheit 11 zugeordnet.

Die Pumpe 8 ist in Kombination mit der in der ersten Abschnitt 10a angeordneten ersten Rückschlagarmatur 9a einer Drückerhöhungseinheit 6 zugeordnet. Die erste Rückschlagarmatur 9a ist nur im Falle, dass ein erster Druck p1 von 600 mbar überschritten wird und nur; entgegen der vorgesehen Durchflussrichtung DR durchfließbar; dies ist durch den neben der ersten Rückschlagarmatur 9a entgegen der vorgegebenen Durchflussrichtung DR zeigenden Pfeil dargestellt. Dadurch kann das Medium 3 in einem durch den Pumpenabschnitt 7 und den ersten parallelen Abschnitt 10a gebildeten Kreislauf fließen. Der erste vorgegebene Druck p1 der ersten Rückschlagarmatur 9a dient dabei der Überwachung der Erhöhung des Drucks in dem Pumpenabschnitt 7 durch die Druckerhöhungseinheit 6.

Für den Fall, dass der Pumpenabschnitt 8 in der vorgesehenen Durchflussrichtung DR nicht durchströmbar ist, beispielsweise aufgrund einer Blockierung der Pumpe 8 kann das Medium 3 alternativ den zweiten parallelen Abschnitt 10b in der vorgesehenen Durchflussrichtung DR durchströmen (siehe Pfeil neben p2). Die zweite Durchschlagarmatur 9b öffnet sich, falls das Medium 3 mit einer Druckdifferenz größer als der zweite vorgebbare Druck p2 (hier 20mbar) auf die zweite Durchschlagarmatur 9b strömt. Hiermit wird also eine erhöhte Ausfallsicherheit gewährleistet, da im Falle der Blockierung der Pumpe 8 die Durchlässigkeit des ersten Leitungszweigs 2 immer noch gewährleistet ist. Die erste Rückschlagarmatur 9a und die zweite Rückschlagarmatur 9b sind beispielsweise als sogenannte Disco-Rückschlagventile ausgebildet, bei denen mittels eines Federmechanismus der erste vorgebbare Druck p1 bzw. der zweite vorgebbare Druck p2 eingestellt ist.

Gegebenenfalls wird im Falle einer Blockierung der Pumpe 8 eine Warnung auf eine beispielsweise als SPS ausgebildete Kontrolleinheit 18 ausgegeben, so dass die Blockierung anschließend behoben werden kann. Selbstverständlich kann auch die Regel-/Auswerteinheit 14 der Temperaturregeleinheit 11 Teil dieser Kontrolleinheit 18 sein.

Die Kontrolleinheit 18 ist, in Kombination mit weiteren Temperatur-Messgeräten 17,19 zur Überwachung bzw. Ausgabe von verschiedenen Alarmen, insbesondere auch zur Temperaturüberwachung ausgebildet. In der hier gezeigten Ausgestaltung ist zur Temperaturüberwachung zumindest ein zweites Temperatur-Messgerät 17 und ein drittes Temperaturmessgerät 19 vorgesehen. Das zweite Temperatur-Messgerät 17 ist innerhalb des als Rohrheizkörpers ausgebildeten Heizelements 12 angeordnet und zur Überwachung des Heizelements 12 ausgestaltet, so dass das Heizelements 12 im Falle des Überschreitens einer vorgebbaren Grenztemperatur T1, z.B. ca. 60°C abgeschaltet wird.

Das dritte Temperaturmessgerät 19 ist in der vorgegebenen Durchflussrichtung DR hinter dem Durchfluss-Messgerät 19 und damit vor dem Motor 21 angeordnet und dient dem Überwachen einer weiteren Grenztemperatur T2, beispielsweise einer unteren Grenztemperatur T2. Damit ist sichergestellt, dass auch nach dem Durchfluss-Messgerät 4 das Medium 3 die weitere untere Grenztemperatur T2 überschreitet und damit die zur Schmierung des Motors 21 benötigen Anforderungen an die Viskosität erfüllt. Das zweite Temperaturmessgerät 17 und das dritte Temperaturmessgerät 19 sind hier als intelligenter Temperaturgrenzschalter mit einem Pt100 Sensor ausgebildet.

Als weitere Alarme wird an die Kontrolleinheit 18 ein Ausfall des Heizelements 12, beispielsweise der Sicherung des Heizelements 12, und/oder ein Ausfall des Motors der Pumpe 8 gegeben. Die Kontrolleinheit 18 kann auch eine zur Anzeige der Alarme ausgestaltete Anzeigeeinheit wie etwa ein Display oder blinkende LEDs umfassen.

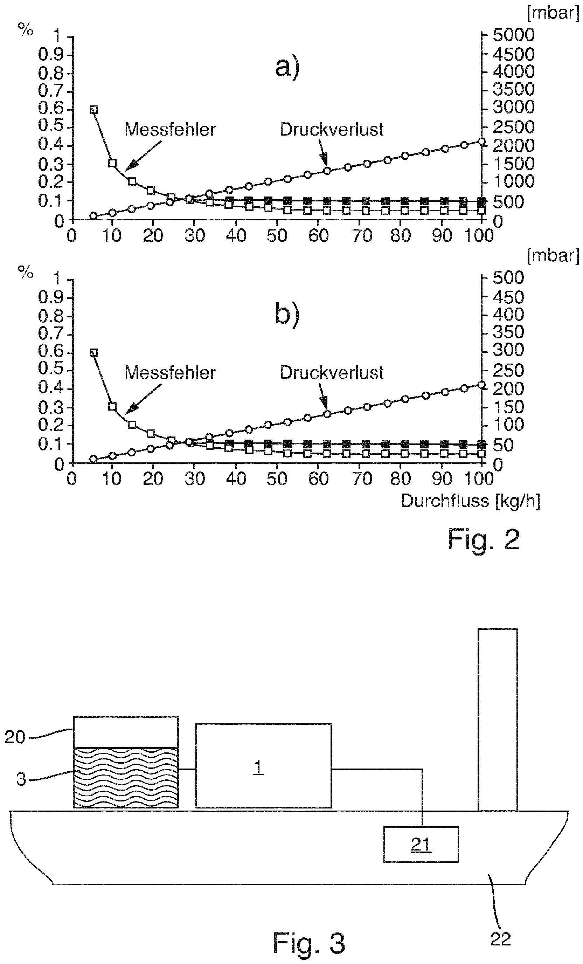

In Fig. 2 sind experimentelle Untersuchungen der Anmelderin dargestellt, in denen das in Fig. 1 gezeigte erfindungsgemäße Messsystem 1 (siehe Fig. 2b) mit einem ansonsten identisch ausgestalteten Messsystem ohne Vorbereitungssystem 5 verglichen wird (Fig. 2a).

Das Medium 3 sowie dessen anfänglicher Druck und die Dichte stimmen in beiden Fällen überein. Gezeigt sind für Massen-Durchflüsse aus einem Bereich von 0-100 kg/h jeweils der resultierende Druckabfall über dem DN8 Coriolis-Durchfluss-Messgerät 4 als ungefüllte Kreise (rechte Skala), sowie der Messfehler des Coriolis-Durchfluss-Messgeräts 4 (in Prozent, linke Skala, gefüllte und ungefüllte Quadrate). Mittels des Vorbereitungssystem 5 des erfindungsgemäßen Messsystems 1 (Fig. 2b) wird die Temperatur des Mediums 3 von 20° C auf 55° Celsius geregelt, mit einer Genauigkeit von +/-5° C. Dadurch wird die Viskosität um ca. eine Größenordnung gesenkt. Auch der Druckverlust reduziert sich um etwa eine Größenordnung (vgl. die unterschiedlichen rechten Skalen in Fig. 2a und 2b). Die experimentellen Untersuchungen demonstrieren damit die vorteilhafte Reduzierung des Druckverlusts über dem Coriolis-Messgerät 4 bei gleichzeitiger Erniedrigung der Viskosität, und damit eine Verbesserung der Fließeigenschaften des Mediums 3.

Das erfindungsgemäße Messsystem 1 kommt bevorzugt in einer mobilen Anwendung zum Einsatz, beispielsweise in dem in Fig. 3 gezeigten motorisierten Seefahrzeug 22. Hierbei wird das Messsystem 1 in Kombination mit einem Bunkertank 20 mit Schmieröl zur Schmierung des Motors 21 des Seefahrzeugs 22 eingesetzt. Dabei ist der Bunkertank 20 in seiner vertikalen Position in Bezug auf den Motor 21 erhöht angeordnet, so dass das Medium 3 durch die Schwerkraft bedingt von dem Bunkertank 20 zu dem Motor 21 fließt.

Ungeachtet der Tatsache, dass die Erfindung im Zusammenhang mit einem Durchfluss-Messgeräts zur Bestimmung und/oder Überwachung des Durchflusses erläutert wurde, ist die Erfindung selbstverständlich nicht auf dieses Ausführungsbeispiel beschränkt, sondern ist auch für das eingangs genannte Beispiel der Bestimmung und/oder der Viskosität, beispielsweise der dynamischen Viskosität η mittels eines Durchfluss-Massemessers relevant.

Bezugszeichen und Symbole

| 1 | Messsystem |
|---|---|
| 2 | erster Leitungszweig |
| 3 | Medium |
| 4 | Messgerät |
| 5 | Vorbereitungssystem |
| 6 | Druckerhöhungseinheit |
| 7 | Pumpenabschnitt |
| 8 | Pumpe |
| 9a,9b | erste/zweite Rückschlagarmatur |
| 10a,10b | erster/zweiter Abschnitt des ersten Leitungszweig |
| 11 | Temperaturregeleinheit |
| 12 | Heizelement |
| 13 | erstes Temperaturmessgerät |
| 14 | Regel-/Auswerteeinheit |
| 15 | zweiter Leitungszweig |
| 16a,16b,16c | Ventile |
| 17 | zweites Temperaturmessgerät |
| 18 | Kontrolleinheit |
| 19 | drittes Temperaturmessgerät |
| 20 | Bunkertank |
| 21 | Motor |
| 22 | Seefahrzeug |

| DR | vorgegebene Durchflussrichtung |
|---|---|
| NW | Nennweite |
| p1 ,p2 | erster/zweiter vorgegebener Solldruck |
| T1 | vorgebbare Grenztemperatur |
| T2, T3 | weitere vorgebbare Grenztemperaturen |
| η | dynamische Viskosität |
| ν | kinematische Viskosität |

**Patentansprüche**

1.  Messsystem (1), aufweisend:

einen ersten Leitungszweig (2), durch den ein Medium (3) in einer vorgegebenen Durchflussrichtung (DR) fließt,
ein in dem ersten Leitungszweig (2) angeordnetes und von dem Medium (3) durchflossenes Messgerät (4) zur Bestimmung und/oder Überwachung des Durchflusses und/oder der Viskosität des Mediums (3), wobei das Messgerät (4) eine vorgegebene Nennweite (NW) aufweist, und ein in der vorgegebenen Durchflussrichtung (DR) in dem ersten Leitungszweig (2) vor dem Messgerät (4) angeordnetes Vorbereitungssystem (5),

- mit einer zur Erhöhung des Drucks des Mediums (3) in dem ersten Leitungszweig (2) ausgestalteten Druckerhöhungseinheit (6), umfassend: eine in einem Pumpenabschnitt (7) des ersten Leitungszweigs (2) angeordnete Pumpe (8); und
eine erste Rückschlagarmatur (9a), die in einem zu dem Pumpenabschnitt (7) parallelen ersten Abschnitt (10) des ersten Leitungszweigs (2) angeordnet ist, wobei die erste Rückschlagarmatur (9a) im Falle des Erreichens eines ersten vorgegebenen Solldrucks (p1) und nur in einer zur vorgegebenen Durchflussrichtung (DR) entgegensetzten Richtung durchströmbar ist; und

- mit einer zur Regelung der Temperatur des Mediums (3) in dem ersten Leitungszweig (2) ausgestalteten Temperaturregeleinheit (11), umfassend:

zumindest ein Heizelement (12),
zumindest ein erstes Temperaturmessgerät (13,..) und
eine mit dem Heizelement (12) und dem ersten Temperaturmessgerät (13) verbundene Regel/Auswerteeinheit (14),
**dadurch gekennzeichnet, dass**
das Vorbereitungssystem (5) eine zweite Rückschlagarmatur (9b) aufweist, die in einem zu dem Pumpenabschnitt (7) parallelen zweiten Abschnitt (10b) des ersten Leitungszweigs (2) angeordnet ist und die im Falle des Erreichens eines zweiten vorgegebenen Solldrucks (p2) und nur in Durchflussrichtung (DR) durchströmbar ist, wobei der zweite vorgegebene Solldruck (p2) kleiner als der erste vorgegebene Solldruck (p1) ist, insbesondere zumindest um einen Faktor 5.

2.  Messsystem (1) nach Anspruch 1, wobei es sich bei der Pumpe (8) um eine Zahnradpumpe handelt.

3.  Messsystem (1) nach zumindest einem der vorherigen Ansprüche,

wobei das Vorbereitungssystem (5) und das Messgerät (4) einen zum ersten Leitungszweig (2) parallelen zweiten Leitungszweig (15) und im ersten Leitungszweig (2) und/oder zweiten Leitungszweig (15) angeordnete Ventile (16a,16b,16c...) aufweisen,

und wobei in Abhängigkeit von der Einstellung der Ventile (16a,16b, 16c...) das Medium (3) entweder über den ersten Leitungszweig (2) oder über den zweiten Leitungszweig (15) in der vorhergesehenen Durchflussrichtung (DR) fließt.

4.  Messsystem (1) nach zumindest einem der vorherigen Ansprüche,
    wobei die Temperaturregeleinheit (11) ein mit dem Heizelement (12) und der Regel-/Auswerteeinheit (14) verbundenes zweites Temperaturmessgerät (17) aufweist, und wobei das zweite Temperaturmessgerät (17) und die Regel-/Auswerteeinheit (14) dazu ausgestaltet sind, beim Überschreiten einer vorgebbaren Grenztemperatur (T1) einen Alarm in einer Kontrolleinheit (18) auszulösen und/oder das Heizelement (12) abzuschalten.

5.  Messsystem (1) nach zumindest einem der vorherigen Ansprüche,
    wobei es sich bei dem Messgerät (4) um ein Coriolis-Messgerät zur Bestimmung des Durchflusses und/oder der Viskosität handelt, das als vorgegebene Nennweite (NW) eine Nennweite kleiner als DN 15, vorzugsweise kleiner als DN 10, aufweist.

6.  Messsystem (1) nach zumindest einem der vorherigen Ansprüche,

    wobei die Temperaturregeleinheit (11) dazu ausgestaltet ist, die Temperatur in dem ersten Leitungszweig (2) auf eine vorgegebene Temperatur mit einer Genauigkeit von zumindest 9° C, insbesondere zumindest 5°C zu regeln,
    und wobei die vorgegebene Temperatur insbesondere zwischen 30 und 70°C liegt.

7.  Messsystem (1) nach zumindest einem der vorherigen Ansprüche,
    wobei das Messsystem (1) ein in dem ersten Leitungszweig (2) angeordnetes drittes Temperaturmessgerät (19) aufweist, das dazu ausgestaltet ist, einen Alarm in der Kontrolleinheit (18) auszulösen, falls die von dem dritten Temperaturmessgerät (19) gemessene Temperatur zumindest eine weitere vorgebbare Grenztemperatur (T2; T3) über- oder unterschreitet.

8.  Messsystem (1) nach Anspruch 7,
    wobei das dritte Temperaturmessgerät (19) in der vorgegebenen Durchflussrichtung (DR) hinter dem Messgerät (4) angeordnet ist,

9.  Messsystem (1) nach zumindest einem der vorherigen Ansprüche 3 bis 8,

    wobei das Messsystem (1) auf einem Seefahrzeug (22) vorgesehen ist,

und wobei das Messsystem (1) dazu ausgestaltet ist, das Medium (3) über den ersten Leitungszweig (2) oder den zweiten Leitungszweig (15) von einem auf dem Seefahrzeug (22) angeordneten Bunkertank (20) zu einem auf dem Seefahrzeug angeordneten Motor (21) zu führen.

10. Messsystem nach Anspruch 9,

    wobei der Bunkertank (20) in der vertikalen Position in Bezug auf den Motor (21) oberhalb des Motors (21) angeordnet ist,
    so dass das Medium (3) im Wesentlichen durch die Schwerkraft bedingt von dem Bunkertank (20) zu dem Motor (21) fließt.

11. Messsystem nach zumindest einem der vorherigen Ansprüche,
    wobei es sich bei dem Medium (3) um ein Mineralöl, insbesondere um ein Kraftstofföl oder um ein Motorschmieröl handelt.

12. Messsystem nach zumindest einem der vorherigen Ansprüche, wobei das Medium (3) vor dem Durchfließen des Vorbereitungssystems (5) eine dynamische Viskosität ($\eta$) von maximal $1760*10^{-3}$ Pa s aufweist.

13. Messsystem nach zumindest einem der vorherigen Ansprüche, wobei das Medium (3) vor dem Durchfließen des Vorbereitungssystems (5) eine kinematische Viskosität ($v$) von maximal 1880 $mm^2$/s aufweist.

14. Messsystem nach zumindest einem der vorherigen Ansprüche, wobei die kinematische Viskosität ($v$) des Mediums (3) bei einer Temperatur von 40°C zwischen 30 und 400 $mm^2$/s liegt.

15. Messsystem nach zumindest einem der vorherigen Ansprüche, wobei die kinematische Viskosität ($v$) des Mediums (3) bei einer Temperatur von 100°C zwischen 5 und 30 $mm^2$/s liegt.

**Claims**

1.  Measuring system (1), comprising:

    a first pipe branch (2) through which a medium (3) flows in a predefined flow direction (DR), a measuring device (4) which is arranged in the first pipe branch (2) and through which the medium (3) flows, wherein said device is designed to determine and/or monitor the flow and/or the viscosity of the medium (3), wherein said measuring device (4) has a predefined nominal diameter (NW),

and a preparation system (5) arranged in the predefined flow direction (DR) in the first pipe branch (2) upstream from the measuring device (4),

- with a pressure increase unit (6) designed to increase the pressure of the medium (3) in the first pipe branch (2), comprising: a pump (8) arranged in a pump section (7) of the first pipe branch (2); and a first non-return valve (9a), which is arranged in a first section (10) of the first pipe branch (2) which is parallel to the pump section (7),

wherein medium can only flow through the first non-return valve (9a) in the event that a first predefined target pressure (p1) is reached and only in a direction opposite to the predefined flow direction (DR); and

- with a temperature regulation unit (11) designed to regulate the temperature of the medium (3) in the first pipe branch (2), said unit comprising:

at least a heat element (12), at least a first temperature measuring device (13, ...) and a control/evaluation unit (14) connected to the heat element (12) and to the first temperature measuring device (13),
**characterized in that**
the preparation system (5) has a second non-return valve (9b), which is arranged in a second section (10b) of the first pipe branch (2) parallel to the pump section (7), and wherein medium can flow through said valve in the event that a second predefined target pressure (p2) is reached and only in the flow direction (DR),
wherein the second predefined target pressure (p2) is less than the first predefined target pressure (p1), particularly by at least a factor of 5.

2. Measuring system (1) as claimed in Claim 1, wherein the pump (8) is a geared pump.

3. Measuring system (1) as claimed in at least one of the previous claims, wherein the preparation system (5) and the measuring device (4) have a second pipe branch (15), parallel to the first pipe branch (2), and valves (16a, 16b, 16c, ...) arranged in the first pipe branch (2) and/or in the second pipe branch (15), and wherein, depending on the setting of the valves (16a, 16b, 16c, ...), the medium (3) flows either via the first pipe branch (2) or via the second pipe branch (15) in the anticipated flow direction (DR).

4. Measuring system (1) as claimed in at least one of the previous claims,

wherein the temperature regulation unit (11) has a second temperature measuring device (17) connected to the heat element (12) and to the control/evaluation unit (14),
and wherein the second temperature measuring device (17) and the control/evaluation unit (14) are designed to trigger an alarm in a control unit (18) and/or to switch off the heat element (12) if a predefined limit temperature (T1) is exceeded.

5. Measuring system (1) as claimed in at least one of the previous claims,
wherein the measuring device (4) is a Coriolis measuring device designed to determine the flow and/or the viscosity, wherein said device has a nominal diameter less than DN 15, preferably less than DN 10 as the nominal diameter (NW).

6. Measuring system (1) as claimed in at least one of the previous claims,

wherein the temperature regulation unit (11) is designed to regulate the temperature in the first pipe branch (2) to a predefined temperature with an accuracy of at least 9 °C, particularly of at least 5 °C,
and wherein the predefined temperature is particularly between 30 and 70 °C.

7. Measuring system (1) as claimed in at least one of the previous claims,
wherein the measuring system (1) has a third temperature measuring device (19) arranged in the first pipe branch (2), wherein said device is designed to trigger an alarm in the control unit (18) if the temperature measured by the third temperature measuring device (19) exceeds or drops below another pre-definable limit temperature (T2, T3).

8. Measuring system (1) as claimed in Claim 7, wherein the third temperature measuring device (19) is arranged behind the measuring device (4) in the predefined flow direction (DR).

9. Measuring system (1) as claimed in at least one of the previous claims 3 to 8, wherein the measuring system (1) is provided on a seagoing vessel (22), and wherein the measuring system (1) is designed to conduct the medium (3) via the first pipe branch (2) or the second pipe branch (15) from a bunker tank (20) arranged on the seagoing vessel (22) to a motor (21) arranged on the seagoing vessel.

10. Measuring system (1) as claimed in Claim 9, wherein in the vertical position in relation to the motor (21), the bunker tank (20) is arranged above the motor (21), such that the medium (3) flows from the bunker tank (20) to the motor (21) essentially due to the force of gravity.

11. Measuring system (1) as claimed in at least one of the previous claims, wherein the medium (3) is a mineral oil, particularly a fuel oil or a motor lubricant oil.

12. Measuring system (1) as claimed in at least one of the previous claims, wherein before flowing through the preparation system (5) the medium (3) has a dynamic viscosity ($\eta$) of maximum $1760 \times 10^{-3}$ Pa•s.

13. Measuring system (1) as claimed in at least one of the previous claims, wherein before flowing through the preparation system (5) the medium (3) has a kinematic viscosity (v) of maximum 1880 mm$^2$/s.

14. Measuring system (1) as claimed in at least one of the previous claims, wherein the kinematic viscosity (v) of the medium (3) at a temperature of 40 °C is between 30 and 400 mm$^2$/s.

15. Measuring system (1) as claimed in at least one of the previous claims, wherein the cinematic viscosity (v) of the medium (3) at a temperature of 100 °C is between 5 and 30 mm$^2$/s.

**Revendications**

1. Système de mesure (1), comprenant :

une première branche de conduite (2), à travers laquelle un produit (3) s'écoule dans un sens d'écoulement (DR) prédéfini, un appareil de mesure (4) disposé dans la première branche de conduite (2) et traversé par le produit (3), lequel appareil est destiné à la détermination et/ou à la surveillance du débit et/ou de la viscosité du produit (3), l'appareil de mesure (4) présentant un diamètre nominal (NW) prédéfini, et un système de préparation (5) disposé dans le sens d'écoulement (DR) prédéfini, dans la première branche de conduite (2) en amont de l'appareil de mesure (4),

- avec une unité d'augmentation de pression (6) conçue pour augmenter la pression du produit (3) dans la première branche de conduite (2), laquelle unité comprend : une pompe (8) disposée dans une section de pompe (7) de la première branche de conduite (2) ; et

un premier clapet anti-retour (9a), lequel est disposé dans une première section (10), parallèle à la section de pompe (7), de la première branche de conduite (2), le premier clapet anti-retour (9a) pouvant être traversé dans le cas où une première pression de consigne (p1) prédéfinie est atteinte et uniquement dans un sens opposé au sens d'écoulement (DR) prédéfini ; et

- avec une unité de régulation de température (11) conçue pour réguler la température du produit (3) dans la première branche de conduite (2), laquelle unité comprend :

au moins un élément chauffant (12), au moins un premier appareil de mesure de température (13, ...) et une unité de régulation/d'exploitation (14) reliée à l'élément chauffant (12) et au premier appareil de mesure de température (13), **caractérisé en ce que** le système de préparation (5) présente un deuxième clapet anti-retour (9b), lequel est disposé dans une deuxième section (10b), parallèle à la section de pompe (7), de la première branche de conduite (2), et lequel clapet peut être traversé par le produit dans le cas où une deuxième pression de consigne (p2) prédéfinie est atteinte et uniquement dans le sens d'écoulement (DR), la deuxième pression de consigne (p2) prédéfinie étant inférieure à la première pression de consigne (p1) prédéfinie, notamment d'au moins un facteur 5.

2. Système de mesure (1) selon la revendication 1, pour lequel la pompe (8) est une pompe à engrenages.

3. Système de mesure (1) selon au moins l'une des revendications précédentes, pour lequel le système de préparation (5) et l'appareil de mesure (4) comportent une deuxième branche de conduite (15), parallèle à la première branche de conduite (2), et des vannes (16a, 16b, 16c, ...) disposées dans la première branche de conduite (2) et/ou dans la deuxième branche de conduite (15), et pour lequel, en fonction du réglage des vannes (16a, 16b, 16c, ...), le produit (3) s'écoule soit par la première branche de conduite (2) soit par la deuxième branche de conduite (15) dans le sens d'écoulement (DR) prévu.

4. Système de mesure (1) selon au moins l'une des revendications précédentes, pour lequel l'unité de régulation de température (11) présente un deuxième appareil de mesure de température (17) relié à l'élément chauffant (12) et à l'unité de régulation/d'exploitation (14),
et pour lequel le deuxième appareil de mesure de température (17) et l'unité de régulation/d'exploitation (14) sont conçus pour déclencher une alarme dans une unité de contrôle (18) et/ou pour couper l'élément chauffant (12) en cas de dépassement d'une température limite (T1) pouvant être prédéfinie.

5. Système de mesure (1) selon au moins l'une des revendications précédentes, pour lequel l'appareil de mesure (4) est un appareil de mesure Coriolis destiné à la détermination du débit et/ou de la viscosité, lequel appareil présente comme diamètre nominal (NW) prédéfini un diamètre nominal inférieur à DN 15, de préférence inférieur à DN 10.

6. Système de mesure (1) selon au moins l'une des revendications précédentes, pour lequel l'unité de régulation de température (11) est conçue pour réguler la température dans la première branche de conduite (2) à une température prédéfinie avec une précision d'au moins 9 °C, notamment d'au moins 5 °C, et pour lequel la température prédéfinie est notamment comprise entre 30 et 70 °C.

7. Système de mesure (1) selon au moins l'une des revendications précédentes, pour lequel le système de mesure (1) présente un troisième appareil de mesure de température (19) disposé dans la première branche de conduite (2), lequel appareil est conçu pour déclencher une alarme dans l'unité de contrôle (18) si la température mesurée par le troisième appareil de mesure de température (19) est supérieure ou inférieure à au moins une autre température limite (T2, T3) pouvant être prédéfinie.

8. Système de mesure (1) selon la revendication 7, pour lequel le troisième appareil de mesure de température (19) est disposé derrière l'appareil de mesure (4) dans le sens d'écoulement (DR) prédéfini.

9. Système de mesure (1) selon au moins l'une des revendications précédentes 3 à 8,

pour lequel le système de mesure (1) est prévu sur un navire (22),
et pour lequel le système de mesure (1) est conçu pour acheminer le produit (3) via la première branche de conduite (2) ou la deuxième branche de conduite (15) à partir d'un réservoir de soute (20) disposé sur le navire (22) jusqu'à un moteur (21) disposé sur le navire.

10. Système de mesure (1) selon la revendication 9, pour lequel le réservoir de soute (20), dans la position verticale par rapport au moteur (21), est disposé au-dessus du moteur (21), de sorte que le produit (3) s'écoule pour l'essentiel par gravité du réservoir de soute (20) vers le moteur (21).

11. Système de mesure (1) selon au moins l'une des revendications précédentes, pour lequel le produit (3) est une huile minérale, notamment une huile de carburant ou une huile de lubrification de moteur.

12. Système de mesure (1) selon au moins l'une des revendications précédentes, pour lequel le produit (3) présente, avant de traverser le système de préparation (5), une viscosité dynamique ($\eta$) de 1 760*10$^{-3}$ Pa•s au maximum.

13. Système de mesure (1) selon au moins l'une des revendications précédentes, pour lequel le produit (3) présente, avant de traverser le système de préparation (5), une viscosité cinématique (v) de 1 880 mm$^2$/s au maximum.

14. Système de mesure (1) selon au moins l'une des revendications précédentes, pour lequel la viscosité cinématique (v) du produit (3) à une température de 40 °C est comprise entre 30 et 400 mm$^2$/s.

15. Système de mesure (1) selon au moins l'une des revendications précédentes, pour lequel la viscosité cinématique (v) du produit (3) à une température de 100 °C est comprise entre 5 et 30 mm$^2$/s.

Fig. 1

Fig. 2

Fig. 3

**EP 3 652 505 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2016059132 A
- US 20140123742 A1
- US 20060277982 A1
- DE 102014119427
- DE 102011006971 A1
- DE 102011006919A1
- US 20130319134 A1
- US 8281668 B2
- US 6415668 B1